# EUROPEAN PATENT APPLICATION

(11) **EP 1 553 762 A2**
(43) Date of publication of application: **13.07.2005**
(21) Application number: 04024963.3
(22) Date of filing: 20.10.2004
(51) Int. Cl.: H04N 5/445

(54) **Information display apparatus and method having folded and unfolded content items**

(30) Priority: 07.01.2004 JP 2004002462
(71) Applicant: Kabushiki Kaisha Toshiba, Tokyo 105-8001 (JP)
(72) Inventor: Nakamura, Takashi Toshiba Corporation, Minato-ku, Tokyo 105-8001 (JP); Horiguchi, Takeo Toshiba Corporation, Minato-ku Tokyo 105-8001 (JP)
(74) Representative: Henkel, Feiler & Hänzel

(57) **Abstract**

An information display apparatus has a display unit (S11) which displays a list of contents and groups of contents, an input unit (S12, S14, S17) which receives a selection instruction of a content or a group name displayed in the list, and a display control unit (S16) which, when a group name is selected, makes the display unit display a list of contents corresponding to the group name and stop displaying the group name and stop displaying the list of contents included in a non-selected group.

## Description

The present invention relates to an information display apparatus and method, which are adaptable to electronic apparatuses having a function of watching, recording and reproducing television programs or a function of handling various contents including video data such as video music program provided via network as a reproducing (playback) object.

In recent years, information processing techniques and communication techniques are improved, and thereby, a large amount of contents has been produced and distributed in various forms. With the foregoing improvement of techniques, a multifunctional type electronic apparatus.available to multiple types of contents has come into use.

The multifunctional type electronic apparatus handles many various kinds of contents. For this reason, it is essential to provide the mechanism for suggesting currently available content information to users so that the content may be easily seen and conveniently used. When various contents are handled as a select object, there have proposed the following display devices for suggesting the contents to users (described in JPN. PAT. APPLN. KOKAI Publication No. 2002-183210, for example). One is a display device for displaying all of the selectable contents on a display screen in a list format. Another is a display device for displaying all of the selectable contents in a scroll form. Another is a display device for displaying all of the selectable contents in a group unit form for each genre (category).

The display device for displaying all of the selectable contents on a display screen in a list format has the following problem considering ease of use. All of the selectable contents are displayed on a limited-size display screen. Therefore, an item displaying individual content must be reduced due to the fact that a large number of content items must be displayed on the small screen. Thus, the more the number of selectable contents increases, the more the content select operation becomes difficult.

The display device for displaying all of selectable contents in a scroll form has the following problem considering ease of use. A scroll operation must be continued until a desired content is found. Therefore, a lot of time is needed in order to select .the desired content. With respect to the group display technique, there is the following disadvantage considering ease of use. First it is necessary to select a group on a group select screen, and thereafter, it is necessary to select a desired content on a content list of the selected group. For this reason, the operation is cumbersome.

As described above, when various contents are handled as the selected object, there is the problem of displaying content selections to the user in a user friendly manner permitting simple operation and ease of use.

The present invention is directed to an information display apparatus and method, which can effectively suggest various contents to users in an improved visual recognition state.

According to an embodiment of the present invention, an information display apparatus comprises a display unit which displays a list of contents and groups of contents; an input unit which receives a selection instruction of a content or a group displayed in the list; and a display control unit which, when a group is selected, makes the display unit display a list of contents-included in the selected group and stop displaying a list of contents included in a non-selected group, and stops displaying the selected group.

According to an embodiment of the invention, there is provided an information display apparatus having a display unit, an input unit and a display control unit. The display unit displays a first list of contents and at least one group name. The at least one group name' corresponding to a second list of contents. The input unit receives a selection instruction corresponding to a selected content from among the first list of contents or the at least one group name displayed on the display unit. The display control unit is operative when the at least one group name is selected by the selection instruction, for causing the display unit to display the second list of contents corresponding to the at least one group name and stop displaying the first list of contents. The display unit is further operative to stop displaying the at least one group name.

This summary of the invention does not necessarily describe all necessary features so that the invention may also be a sub-combination of these described features.

The invention can be more fully understood from the following detailed description when taken in conjunction with the accompanying drawings, in which:
FIG. 1A, FIG. 1B and FIG. 1C are views showing the state transition of a title list of a selected screen to explain the basic configuration according to a first embodiment of the present invention;
FIG. 2A and FIG. 2B are views showing the state transition when a content is selected on a list shown in FIG. 1A to FIG. 1C;
FIG. 3 is a view to explain the operational environment of an information display apparatus according to a second embodiment;
FIG. 4 is a block diagram showing the configuration of the information display apparatus according to the second embodiment;
FIG. 5 is a view showing the appearance and button arrangement of a remote controller used for a remote control of the information display apparatus according to the second embodiment;
FIG. 6 is a view showing the state transition of a screen and a title list of the information display apparatus according to the second embodiment;
FIG. 7 is a flowchart to explain the list display control procedure of the information-display apparatus according to the second embodiment;
FIG. 8 is a view showing a list display of the information display apparatus according to the second embodiment;
FIG. 9 is a view showing another list display of the information display apparatus according to the second embodiment;
FIG. 10 is a view showing another list display of the information display apparatus according to the second embodiment;
FIG. 11 is a view showing another list display of the information display apparatus according to the second embodiment; and
FIG. 12A, FIG. 12B, FIG. 12C, and FIG. 12D are views showing the changeover state transition of a category list of the information display apparatus according to the second embodiment.

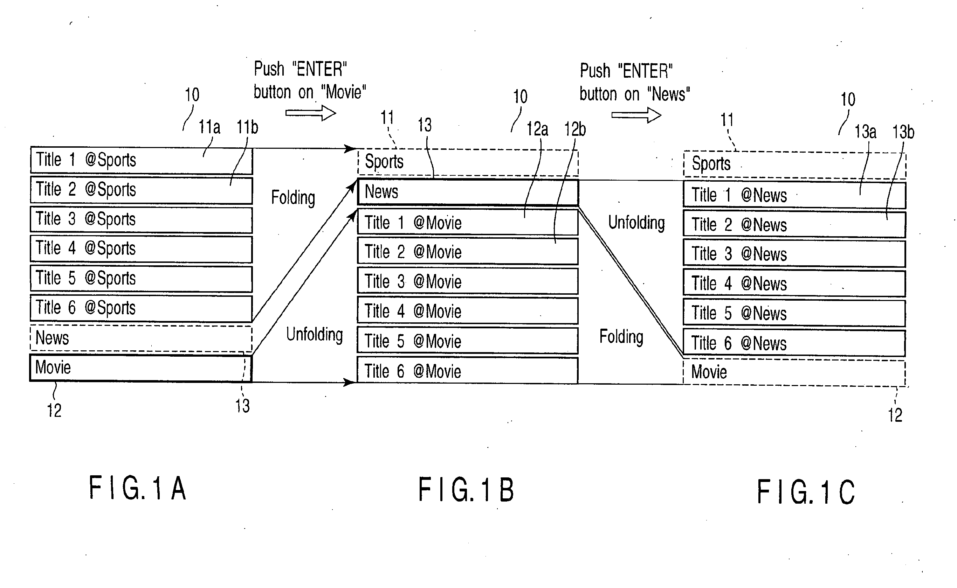

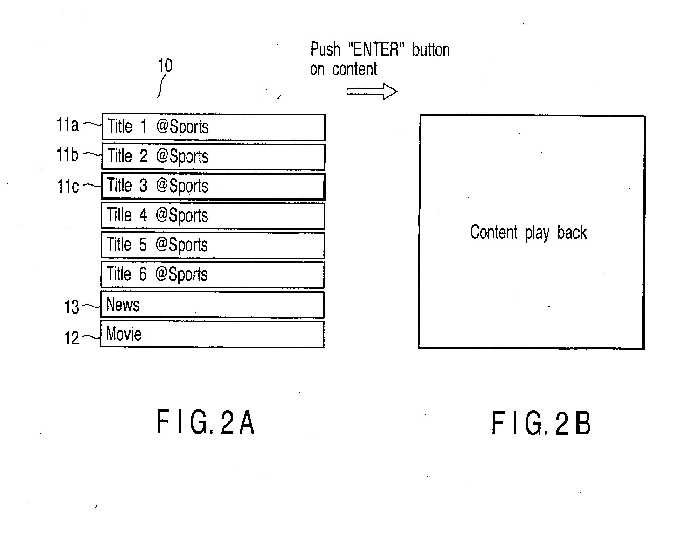

The basic configuration of a first embodiment of the present invention will be described below with reference to FIG. 1A to FIG. 1C, FIG. 2A and FIG. 2B.

According to the first embodiment, user's visual recognition is improved in the following manner. When various contents are displayed in a list (title list) form, contents having the same attribute are classified into several groups. Currently unnecessary groups are collapsed or folded (such as placed in a folder) as a shrink pack display, and then, displayed as one item on the list, and thereby, the number of list-displayed contents (items) is reduced. More specifically, one folder exists on the list as one item of the list, that is, a shrink pack. When the item is selected, items included in the shrink pack are unfolded (expanded) in the list as selectable contents. In this case, the unfolded content list is folded, and thereafter, displayed as a shrink pack of the grouped content, that is, one item of the list.

FIG. 1A to FIG. 1C shows the operation of displaying the list when the group of the foregoing case is selected. FIG. 2A and FIG. 28 shows the operation when a title representing a content is selected from the list.

FIG. 1A to FIG. 1C shows the display state transition of a list when reproducible contents handled in the apparatus are grouped into contents relevant to movie, news and sports. There exist some shrink packs, that is, a shrink pack 11 of "Sports", a shrink pack 12 of "Movie" and a shrink pack 13 of "News".

On a list 10 shown in FIG. 1A, content titles included in the shrink pack 11 of "Sports" are unfolded as selectable items 11a, 11b, ··· and 11n .On the list 10, the following content group titles (such as a category) are simultaneously displayed in addition to selectable items 11a, 11b, ··· and 11n for selecting contents. One is a shrink pack 12 labeled "Movie" which is a group title of folded movie contents, and another is a shrink pack 13 labeled "News" which is a group title of folded news contents. Since the individual content titles for the group "Sports" are displayed, i.e., the Sports group is unfolded, the group title for "Sports" is not displayed.

An explanation of how folding and unfolding works in detail, is next made in connection with the user choosing to display the detailed content titles of the group "Movie." On the list 10 shown in FIG. 1A, the group title of shrink pack 12 "Movie" is selected by operating a keyboard and predetermined buttons of a remote controller or a pointing device on a screen. By doing so, the unfolded "Sports" content titles are automatically folded, and thereafter, the selectable content titles 12a, 12b, ··· and 12n included in the selected group shrink pack 12 are unfolded on the list 10 in place of the "Sports" content list. Further, the group label for "Movie" is no longer displayed. FIG. 1B shows the state described above. Here, the operation for selecting the foregoing items is made using an "ENTER" button of a remote controller (not shown). When the "Movie" shrink pack 12 is selected by the "ENTER" button operation, the unfolded "Sports" content titles (selectable items 11a, 11b, ··· and 11n) are folded, and the group title for "Sports" is added to the list 10 as the shrink pack 11 of "Sports". In place of the "Sports" content list, selectable content titles 12a, 12b, ··· and 12n included in the "Movie" shrink pack 12 are unfolded on the list 10. If there is insufficient room to display all movie titles on the unfolded display, a scroll function may be employed to permit the user to scroll through the non-displayed movie titles or to replace the displayed movie titles with an approximately equal number of non-displayed movie titles to facilitate user selection.

On the list 10 shown in FIG. 1B, when the "News" shrink pack 13 is further selected by the "ENTER" button operation, the unfolded "Movie" content titles are folded, and the "Movie" group shrink pack tile 12 is added to the list 10. In place of the "Movie" content list, selectable content titles 13a, 13b, ··· and 13n included in the "News" shrink pack 13 are unfolded on the list 10. The "News" group title is no longer displayed. FIG. 1C shows the state described above. When the "News" shrink pack 13 is selected by the "ENTER" button operation likewise above, the unfolded "Movie" content titles (selectable content titles 12a, 12b, ··· and 12n) are folded. Thereafter, the "Movie" content titles are displayed on the list 10 as the "Movie" shrink pack 12 of "Movie". Instead, selectable content titles 13a, 13b, ··· and 13n included in the shrink pack 13 of "News" are unfolded on the list 10.

As described above, when a particular shrink pack including several contents is selected, any unfolded content titles are folded, and content titles of the particular selected shrink pack are unfolded.

When one of the unfolded contents is selected, the selected content is played back. FIG. 2A and FIG. 2B show the state transition. More specifically, FIG. 2A and FIG. 2B show the state that content titles 11a, 11b, ··· and 11n relevant to sport shown in FIG. 1A are unfolded as selectable items on the list 10, and one content is selected as an object to be reproduced. FIG. 2A shows a state in which the content titles 11a, 11b, ··· and 11n relevant to sport are unfolded on the list 10. FIG. 2B shows a state in which one title, that is, content title 11c, is selected from the content titles as the reproduction object, and the content corresponding to the selected title is reproduced.

The content list display function according to the embodiment is applied to AV (Audio-Visual) apparatuses which may handling various contents as objects to be reproduced. Thus, a group of currently unnecessary titles are folded and displayed on the list of a content select screen of the AV apparatus, and thereafter, a list is displayed. By doing so, it is possible to reduce the number of content titles displayed, and thus to improve a user's visual recognition of selectable objects. When the folded group is unfolded, previously unfolded contents are automatically folded. Thus, a preferable visual recognition is always maintained without unnecessarily increasing the number of content listings.

The following various categories are given depending on the content information of the group. The categories are content location (recording drive or storage location of the apparatus connected to the network or provider), program genre, broadcasting or recording date, artist name, and watched/non-watched titles. The group (category) may be changed by the user during set-up such that the user's visible recognition is improved.

When the group (shrink pack folded contents) is selected by the same operation as selecting the content, contents included in the selected group are unfolded, and simultaneously, the unfolded contents are automatically folded as one item (shrink pack). Thus, only contents included in the required group are always displayed on the list. Therefore, the number of contents simultaneously displayed is reduced, and a desired content is easy to be found from the list in a limited display screen. If a subgroup further exists in the unfolded group, the same shrink pack as described above is hierarchically formed, and thereby, the foregoing effect is obtained with respect to an increase of the reproduction object contents.

The following is a description of a second embodiment relating to a content list display function according to the foregoing basic configuration.

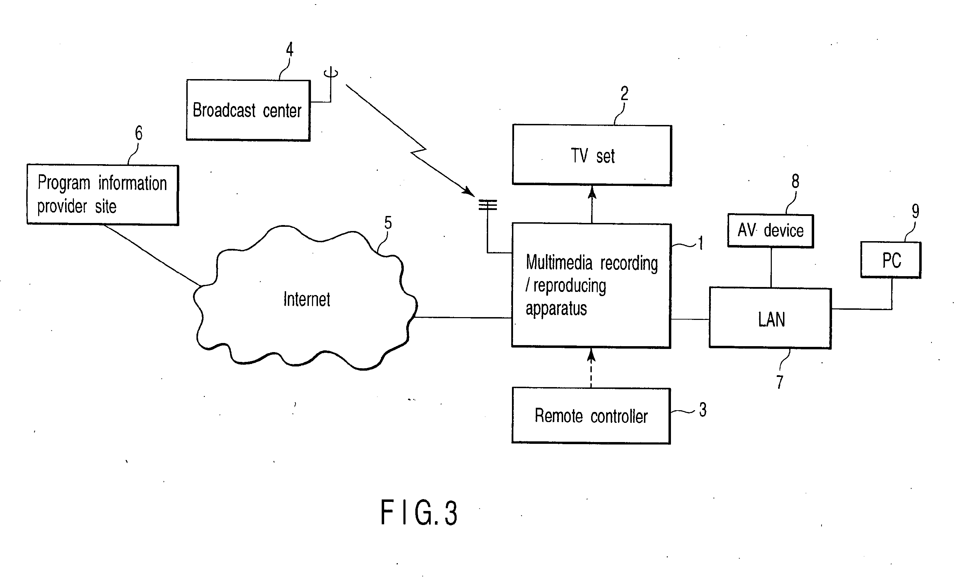

FIG. 3 is a view to explain the operational environment of an information display apparatus of the second embodiment, that is, a multimedia recording/reproducing apparatus.

A multimedia recording/reproducing apparatus 1 is a multifunctional type electronic apparatus, which is capable of handling several kinds of contents given below. The contents include television broadcast data (or satellite or cable data), video data, music data and photograph data. The multimedia recording/reproducing apparatus 1 outputs image and voice data of individual contents to a TV set 2. Remote control is carried out with respect the multimedia recording/reproducing apparatus 1 using a remote controller 3.

The multimedia recording/reproducing apparatus 1 has a television function of receiving television broadcast broadcasted from a broadcast center 4 (or satellite or cable audiovisual data), and displaying it on the TV set 2. The apparatus 1 is able to acquire television program table data provided by a program information provider site 6 via Internet 5, in addition to receive a television broadcast. The television program table data includes various information. For example, the information may include broadcast schedule (program name and broadcast time) of each program by the broadcast center 4, a thumbnail image of a typical one scene, explanation of the image content, text showing program performers and genre identifier.

The multimedia recording/reproducing apparatus 1 has a video function of recording the received television transmission. The apparatus 1 has a recording reservation function using the television program table data acquired from the program information provider site 6 as the main function of the video function. When recording a certain program, the multimedia recording/reproducing apparatus 1 may also record the program information included in the television program table data as recording video attached information. The foregoing video and television functions are simultaneously operable. For example, a television broadcast of a channel B may be recorded when the user is watching a television broadcast of a channel A. In other words, the multimedia recording/reproducing apparatus 1 is a so-called multi-tuner type electronic apparatus.

The multimedia recording/reproducing apparatus 1 further has a server function. Thus, the apparatus 1 is connectable with an audio/visual (AV) device 8 and a personal computer (PC) 9 via LAN (Local Area Network) 7 connected in the user's home. The server function is used for storing music data sent from the AV device 8 and photograph data sent from the PC 9. The stored music and photograph data are output to the TV set 2 upon receiving reproduction instruction from the remote controller 3.

The capture of the foregoing music and photograph data is possible under stand-alone environment by using peripheral devices built in the multimedia recording/reproducing apparatus 1, in addition to the LAN 7. Reproduction instruction of the stored data is acceptable via LAN 7 from of the AV device 8 and the PC 9, in addition to the instruction from the remote controller 3. In this case, the multimedia recording/reproducing apparatus 1 sends the required data to the AV device 8 and the PC 9 via the LAN 7.
The instruction acceptance via the LAN 7 is possible with respect to the foregoing television and video functions. For example, the user can watch a television broadcast using the PC 9, or make recording reservation and watch a recorded program in a room different from the room provided with the multimedia recording/reproducing apparatus 1.

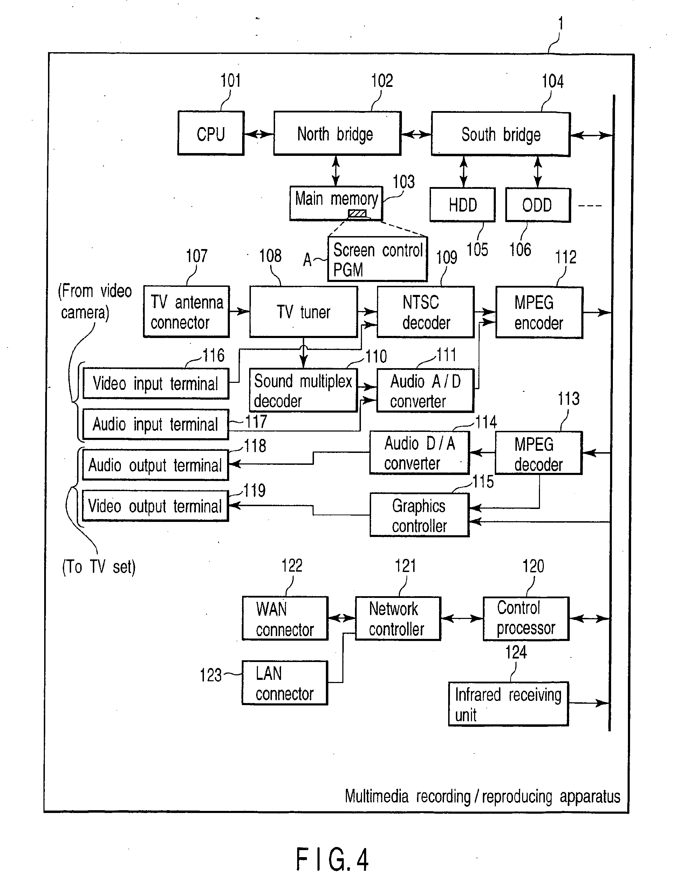

FIG. 4 is a block diagram showing the device configuration of the multimedia recording/reproducing apparatus 1.

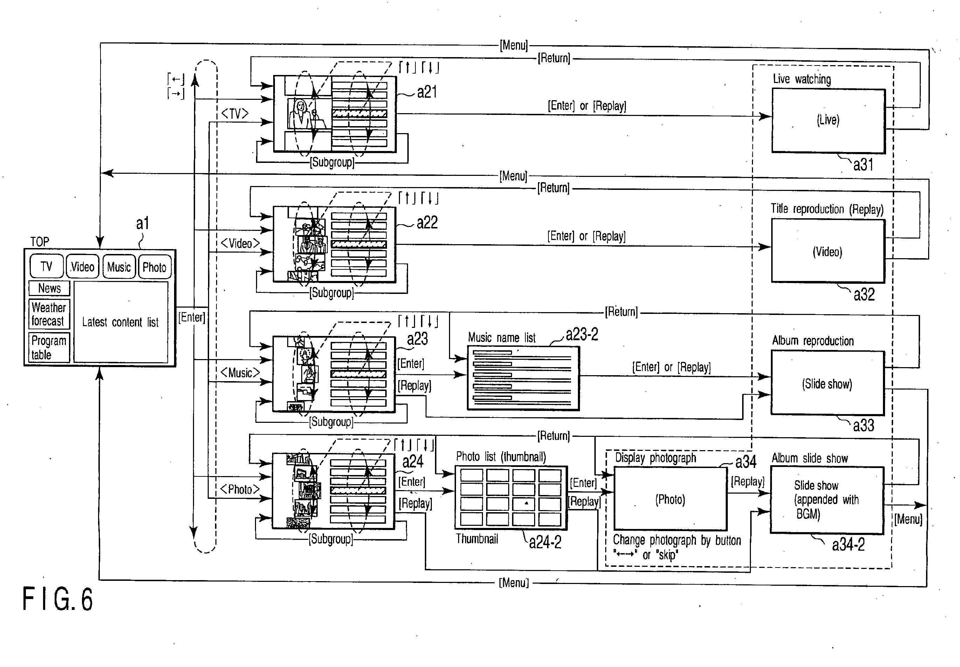

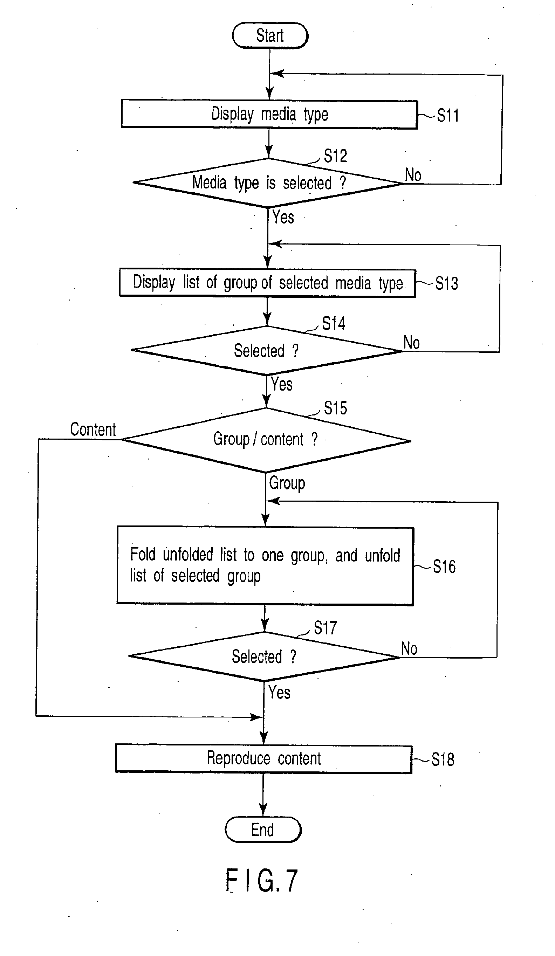

A CPU 101 controls the whole of the multimedia recording/reproducing apparatus 1. The CPU 101 makes an access control with respect to a main memory 103 via a north bridge 102 to execute various programs stored in the main memory 103. The main memory 103 stores a screen control program "A" functioning as part of a user interface of the multimedia recording/reproducing apparatus 1. Screen control by the multimedia recording/reproducing apparatus 1 is realized according to the screen control program "A". According to the present embodiment, a list display processing routine shown in FIG. 7 is used for realizing the list display function using the shrink pack already described in FIG. 1A to FIG. 1C, FIG. 2A and FIG. 2B. The CPU 101 executes the list display processing routine according to the screen control program "A", and thereby, a list display control function for various contents shown in FIG. 6, FIG. 8 to FIG. 12D described later is realized.

On a list displayed by the list display control function, one item of the list, that is, one folder exists as a shrink pack. When one item is selected, selectable contents included in the shrink pack are unfolded on the list. The unfolded content list is folded, and then, displayed on the list as a grouped content shrink pack. The list display function of various contents will be described later with reference to FIG. 6 to FIG. 12D.

The north bridge 102 is further connected with a south bridge 104. The CPU 101 and the main memory 103 are connected with a system bus via the north and south bridges 102 and 104. The south bridge 104 drives and controls various peripheral devices such as a hard disk drive (HDD) 105, an optical disk drive (ODD) 106. Television program data, video data, music data and photograph data are recorded to the HDD 105 and ODD 106.

A TV antenna located at the roof is connected with the multimedia recording/reproducing apparatus 1 via a TV antenna connector 107. A TV broadcast signal input from the TV antenna connector 107 is transferred to a TV tuner 108. The TV tuner 108 is used for receiving TV broadcast program data of a desired channel requested from the remote controller 3 or the PC 9 via the LAN 7. Based on the request, the TV tuner 108 receives the TV broadcast signal and selects the desired channel.

A video signal of TV broadcast program data of a channel received by the TV tuner 108 is sent to an NTSC decoder 109, and thereafter, converted into a digital data. An audio signal is sent from a sound multiplex decoder 110 to an audio A/D converter 111, and thereafter, converted into a digital signal. The sound multiplex decoder 110 interposed between the TV tuner 108 and the audio A/D converter 111 demodulates a sound multiplex signal such as a sub-sound superposed with the TV broadcast program data as the need arises.

The NTSC decoder 109 is connected with a video input terminal 116, and is supplied with a video signal from an external video device such as DVD player, for example. The audio A/D converter 111 is connected with an audio input terminal 117, and is supplied with an audio signal from an external audio (video) device.

An MPEG encoder 112 compresses and encodes input video and audio data. In this case, MPEG-2 is used for compression encoding. The TV broadcast program data received by the TV tuner 108 is compressed and encoded by the MPEG encoder 112, and thereafter, converted into an MPEG-2 stream. The compressed and encoded TV broadcast program data is transferred in accordance with the cases. More specifically, the data is transferred to an MPEG decoder 113 if the user watches the program by the TV set 2. The data is transferred to a control processor 120 described later if the user watches the program by the PC 9 via the LAN 7. The data is transferred to the HDD 105 if the user makes video recording.

-On the other hand, the MPEG decoder 113 decodes the compressed and encoded TV broadcast program data into the MPEG-2 format. For example, if the user watches the compressed and encoded TV broadcast program data recorded in the HDD 105 using the TV set 2, the compressed and encoded data read from the HDD 105 is decoded after being sent to the MPEG decoder 113.

A video data decoded by the MPEG decoder 113 is supplied to a graphics controller 115, and thereafter, sent to the TV set 2 via a video output terminal 119. An audio data decoded by the MPEG decoder 113 is converted into an analog signal by an audio D/A converter 114, and thereafter, sent to the TV set 2 via an audio output terminal 118. The graphics controller 115 superposes the video data decoded by the MPEG decoder 113 with image data prepared by the CPU 101. The graphics controller 115 sets a transmittance of the superposed image data in accordance with the instruction from the CPU 101. More specifically, image synthesis is made to superpose the image data prepared by the CPU 101 with the video data decoded by the MPEG decoder 113. In this case, the transmittance of the superposed image is controlled, thereby creating an image of the video data decoded by the MPEG decoder 113 transmitting the image data prepared by the CPU 101.

A WAN connector 122 is a terminal used for data exchange with Internet 5. A LAN connector 123 is a terminal used for data exchange with the LAN 7.
A network controller 121 is a network control device for controlling the data exchange with Internet 5 via the WAN connector 122 and the data exchange with the LAN 7 via the LAN connector 123. The control processor 120 drives and controls the network controller 121 in accordance with the instruction from the CPU 101.

An infrared receiving unit 124, operating as an input unit, receives operational information including commands and selection instructions transmitted in the form of infrared signals output from the remote controller 3, and transmits operational commands and selection instructions indicated by the infrared signals to the CPU 101. More specifically, when receiving the infrared signal, the infrared receiving unit 124 stores the operational information in a built-in register, and generates an interrupt to the CPU 101. In response to the interrupt, when the CPU 101 makes a reference request of the built-in register, the infrared receiving unit 124 outputs the operational information to a system bus.

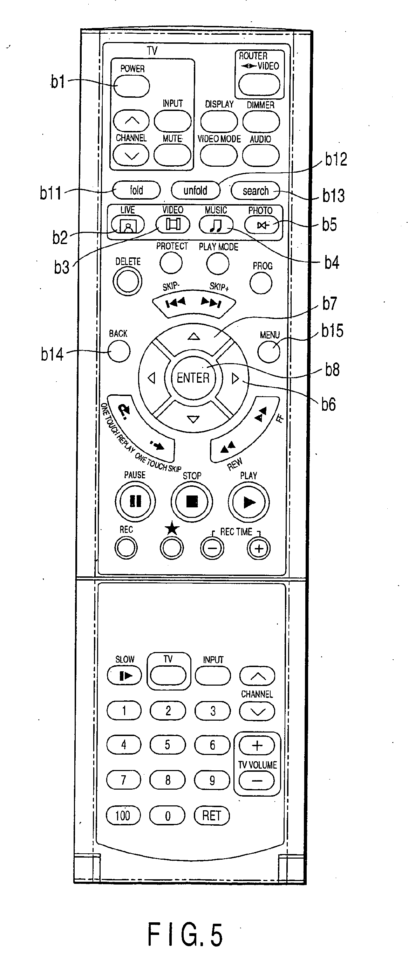

FIG. 5 shows the appearance and operational buttons of the remote controller 3 used for the remote control of the multimedia recording/reproducing apparatus 1 having the configuration described above. The remote controller 3 is provided with various buttons b1 to b15; more specifically, "POWER", "LIVE", "VIDEO", "MUSIC", "PHOTO", horizontal and vertical direction indicators, "ENTER", "FOLD", "UNFOLD", "SEARCH", "BACK" and "MENU". Further, the remote controller 3 is provided with various buttons such as "PLAY", "STOP", "PAUSE", etc.

According to the embodiment, contents are grouped for each media type such as TV (LIVE), video (VIDEO), music (MUSIC) and photography (PHOTO). Further, the contents are grouped every genre, category and location of each media type, and classified into sub-group as the need arises.

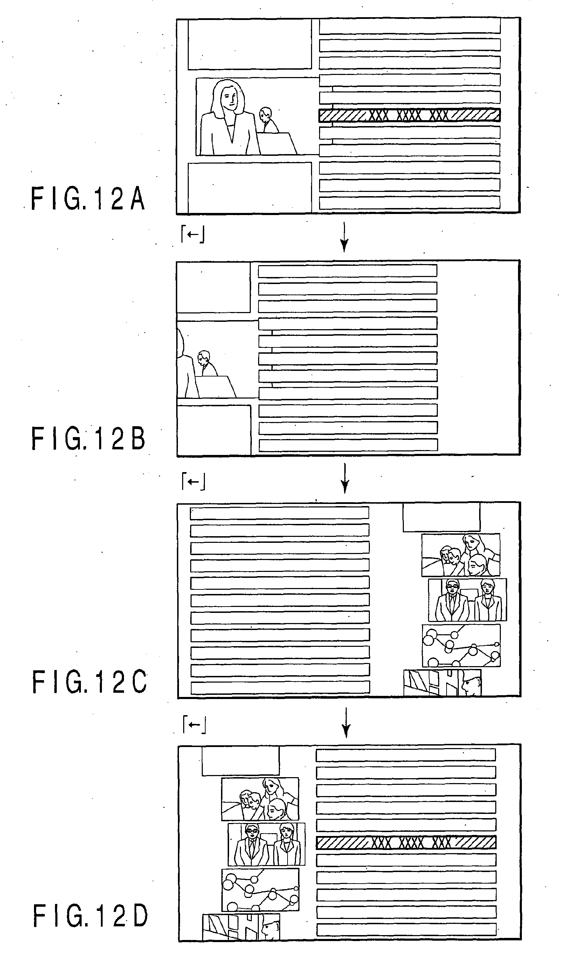

Any of "LIVE", "VIDEO", "MUSIC" and "PHOTO" buttons b2 to b5 is selectively operated with respect to the contents hierarchically grouped as described above, and thereby, the media type is changeable (selectable). The horizontal (right and left) directional indicator button b6 is operated, and thereby, a media type appended with animation effect is changeable (selectable)(see FIG. 12A to FIG. 12D).

The "FOLD" button b11 is operated, and thereby, unfolded content titles on the list are folded as a shrink pack, and then, displayed as one item. On the other hand, the "UNFOLD" button b12 is operated, and thereby, content titles included in the shrink pack are unfolded and displayed on the list. In this case, unfolded content titles are folded as a shrink pack, and then, displayed as one item.

If the "ENTER" button b8 is operated with respect to a select object item on the list instead of the "FOLD" and "UNFOLD" buttons b11 and B12, the content is reproduced or the details of the content is displayed if the item is a content item. If the item is a shrink pack item, content titles included in the shrink pack are unfolded and displayed on the list and the group name of the shrink pack is no longer displayed. Further, unfolded content titles are folded and displayed as a shrink pack, and then, displayed as one item with the group name of the shrink pack displayed.

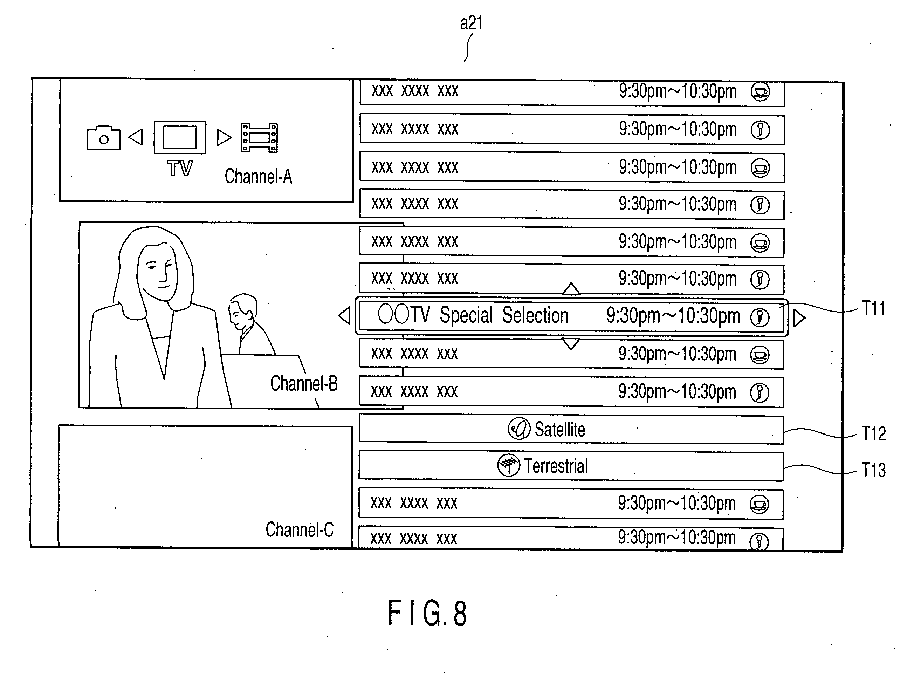

According to the second embodiment, the vertical (up and down) direction indicator button b7 is operated, and thereby, the list content on the select screen is scrolled to the indicated direction. The pointer is focused on a predetermined display position displayed on the select screen; for example, the center position of one of the list items vertically arranged items. The predetermined display position may be displayed with a distinctive border, reverse colored, highlighted or otherwise distinguished from other positions so that the user may easily determine when a listed item is in the predetermined position. Then, the "ENTER" button b8 is operated with respect to the focused item, and thereby, the item is selected (see FIG. 8 to FIG. 11).

Thus, the vertical direction indicator button b7 is operated to scroll the list, and the "ENTER" button b8 is operated in a state in which the pointer is focused on a desired content or shrink pack item.
By doing so, if the focused item is a content item, the content is reproduced or the details of the content is displayed. If the item is a shrink pack item, content titles included in the shrink pack are unfolded and displayed on the list.

In an alternative embodiment, the vertical direction buttons b7 may be used both to scroll the list of display items and also to move a pointing position of a pointer or cursor in a similar fashion as in using the up/down arrows on a keyboard to control the curser of a personal computer. In this embodiment, the pointer position may be displayed with a distinctive border, highlight, reverse colored or otherwise distinguish to identify the listed item on which the pointer is currently pointing to permit the user to easily recognize same. When the pointing position reaches the bottom of the display listings, a further depression of the down vertical direction indicator button b7 results in the listed items being scrolled upward to add more items from the bottom with items at the top of the display screen being no longer displayed. When the pointing position is moved to the top of the listing, a further depression of the up vertical direction indicator button 7b results in the listed items being scrolled downward to add more items from the top with items previously displayed on the bottom of the screen no longer displayed. For any of the items displayed, the user may select a desired listed item for reproduction/viewing simply by moving the pointing position to a desired item using the same vertical direction indicator button 7b (up or down) and pressing the "ENTER" button b8. Thus, in this embodiment, the desired particular list item may be selected not by placing or scrolling the desired item in a predetermined position on the display screen, but rather by moving the pointer to the position of the desired item wherever it may be displayed on the display screen.

As used herein, the term "focused" or "focused item" is intended to indicate an item which is either placed in the predetermined position in the display screen or on which the pointing device is currently pointing. For such focused items, all that is necessary of the user to actually select the program identified by the item is for the user to press the "ENTER" button 8b on the remote controller 3.

FIG. 6 shows the state transition on the display screen of the multimedia recording/reproducing apparatus 1 according to the button operation described above.

In the embodiment, the focused item is displayed as the main object while the corresponding moving or still image is simultaneously displayed together with the list.

As described before, the multimedia recording/reproducing apparatus 1 is a multifunctional type electronic apparatus, which is capable of handling several kinds of contents such as television programming, video, music and photograph data. When the apparatus 1 is powered on by operating the "POWER" button b1 provided on the remote controller 3 or other switch to boot up the system, the screen control program "A" displays a screen a1 as the initial screen. The screen a1 is used for selecting which category (media type) contents are used. For this purpose, indicators shown on the top of the initial screen a1 correspond to the choices for media types. On the initial screen al, when any of media types is selected by the button operation of the remote controller 3, select screens a21 to a24 shown in FIG. 8 to FIG. 11 described later are displayed. The select screens a21 to a24 are used for selecting contents of the selected media type. As will become clear from the discussion below, each media type is associated with its own list of contents. Typically, each of these list of contents will include at least one group name corresponding to a folded or shrink pack additional list of contents. Thus, TV screen a21 may show a first list of contents with a second list hidden in the form of a folded list with only the group name displayed for the folded list. Video screen a22 displays a third list of contents with a fourth list hidden in the form of a fold list with only the group name displayed for the folded list etc.

On the select screens a21 to a24, a list (title list) of currently available contents in the category (media type) is displayed. On the list, various information such as thumbnail images are displayed in addition to the title in order to visually and readily grasp the details of contents. The user making reference to the list selects a desired content by operation of the buttons on the remote controller 3, and as a result is able to command the multimedia recording-reproducing apparatus 1 to begin reproduction or recording. According to the foregoing instruction, the screen control program "A" makes a changeover (screen transition) to screens a31 to a34-2 for displaying an image of the selected content from select screens a21 to a24. As described above, the user arbitrarily selects and uses (reproduces) the content of each category of television programming, video, music and photograph data.

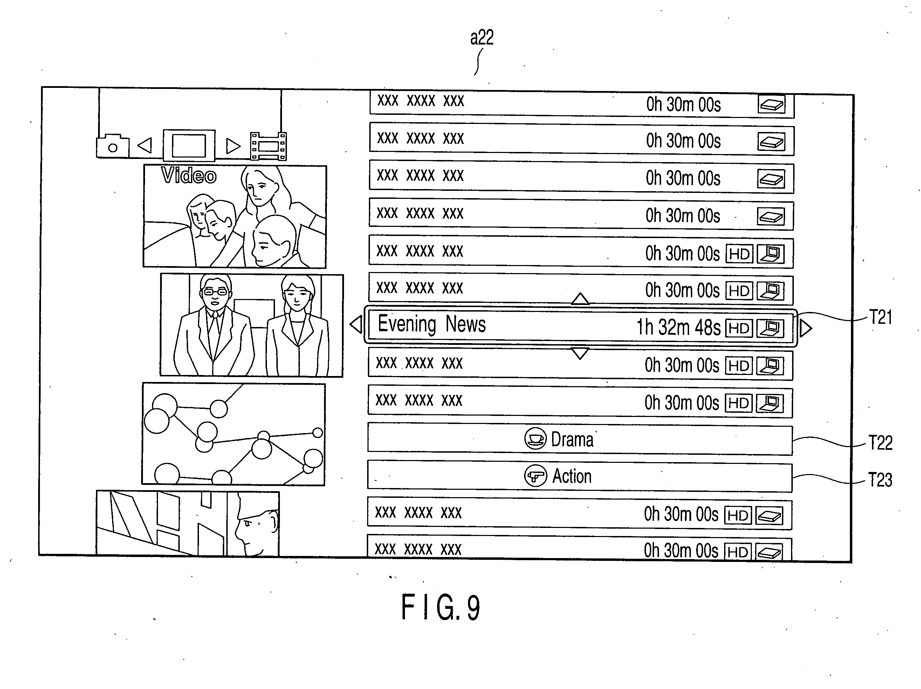

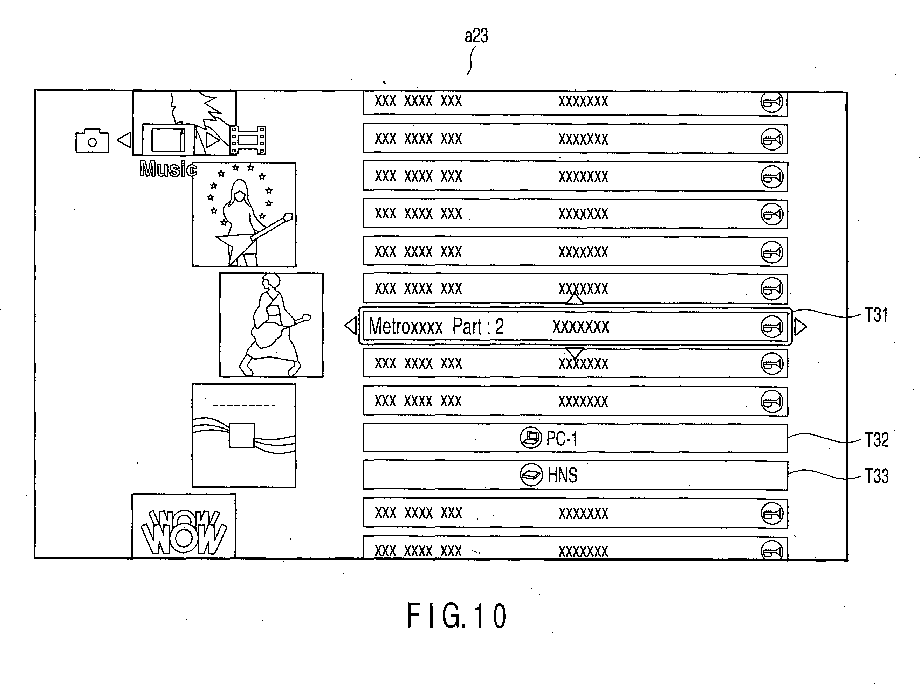

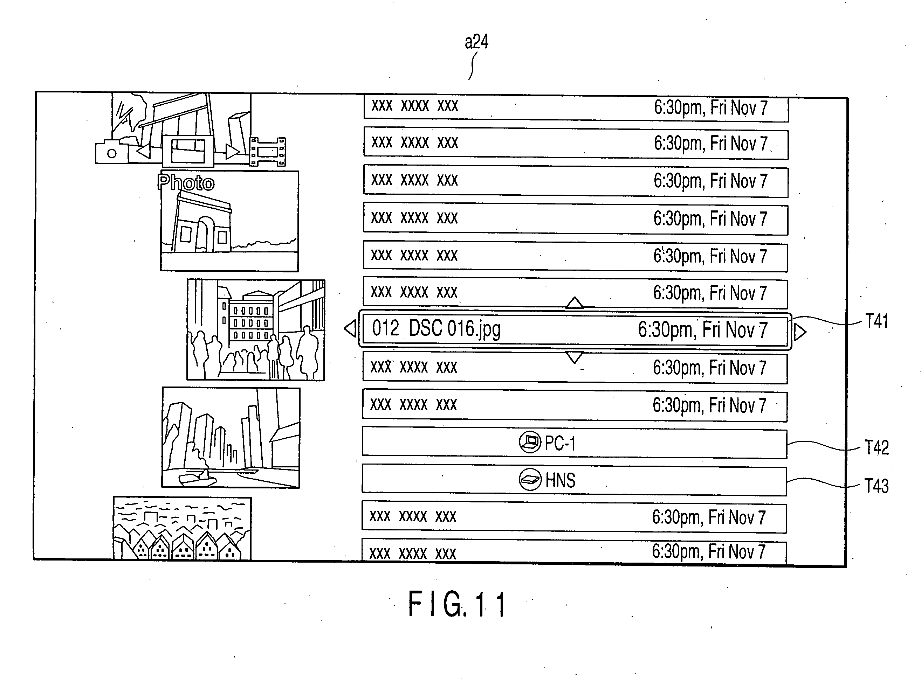

FIG. 8 shows a list display when television programming data (for example, broadcast, satellite, cable) is selected. FIG. 9 shows a list display when video data is selected. FIG. 10 shows a list display when music data is selected. FIG. 11 shows a list display when photograph data is selected.

On the list shown in FIG. 8, an item T11 is focused while the program video image corresponding to the item T11 is displayed. Thus, operation of the vertical direction button b7 to focus an item being displayed permits the CPU 101 to identify the focused item and to retrieve image data associated with the focused item (i.e., channel B). This image data is displayed even thought the user has not selected the focused item by pressing the "ENTER" button b8 on the remoter controller 3. Thus, these images are displayed regardless of whether or not the focused item is associated with a selection instruction generated by the input unit 124 when the "ENTER" button b8 is depressed. As shown in FIG. 8, image data corresponding to the item below the focused item is displayed at a position below the image data corresponding to the focused item (i.e., channel C). Channel A is used as a menu display to permit the operator to easily switch to another category such as video or photo as illustrated or music (not illustrated). Items T12 and T13 displayed on the list are individual shrink packs which include folded contents (channels for each broadcast mode, such as satellite or terrestrial). In FIG. 8, it may be assumed that cable TV programming is selected. In this case, the unfolded list shown in FIG. 8 may correspond to another mode of TV programming such as broadcast (terrestrial) or satellite.

On the list shown in FIG. 9, an item T21 is focused while the video image corresponding to the item T21 is displayed. Items T22 and T23 displayed on the list are different individual genre classified shrink packs which include folded contents using video data as an object.

On the list shown in FIG. 10, an item T31 is focused while predetermined images corresponding to the item T31 are displayed. Items T32 and T33 displayed on the list are individual classified shrink packs which include folded contents using music data as an object.

On the list shown in FIG. 11, an item T41 is focused while predetermined photograph images corresponding to the item T41 are displayed. Items T42 and T43 displayed on the list are individual classified shrink packs which include folded contents using photograph as an object.

FIG. 12A to FIG. 12D shows the state transition appended with animation effect by operating the right direction indicator button b6 provided on the remote controller 3. The operation of this button sends a media type change instruction to the input unit 124 of the multimedia recording/reproducing apparatus 1. More specifically, FIG. 12A to FIG. 12D shows the state transition when the screen is transferred from the television data select screen shown in FIG. 8 to the video data select screen shown in FIG. 9. It is noted that during the transition from television data to video data, the display scrolls horizontally across the display screen, from right to left. This distinctive type of scrolling (as compared to the more common vertical scrolling) provides the user with a visual confirmation that a category transition (i.e., TV to video) is taking place. During the actual category transition itself, images that are normally viewed as animated, may only be seen as still images instead, with the list information being displayed in a normal fashion.

FIG. 7 is a flowchart to explain the list (title list) display control procedure. In this case, the CPU 101, operating as a display control unit, executes the screen control program "A" stored in the main memory 103, and thereby, the procedure is realized.

According to the procedure, the remote controller is utilized to focus an item on the list so as to select the item (YES in step S14) under the conditions that a list of a media type is previously displayed at step S11 to S14. Then, the CPU 101 determines whether the selected item is a content item of a currently unfolded group or a shrink pack item of a group which includes folded contents (step S15).

If the selected item is a content item of a currently unfolded group, the content is reproduced at step S18 (see FIG. 2A, FIG. 2B, FIG. 6 (a31 to a34)).

If the selected item is a shrink pack item of a group which includes folded contents, the content list (titles) of the currently displayed unfolded group is folded to one item, and then, displayed as a shrink pack. In place of the previous content list, a content list of the selected shrink pack is unfolded and displayed at steps S16 and S17 (see FIG. 1, FIG. 6, FIG. 8 to FIG. 11). Further, as to the unfolded contents, that previously displayed name of the shrink pack is no longer displayed.

As described above, when a shrink pack which includes folded contents is selected, the currently displayed unfolded content list (titles) is folded and displayed as a shrink pack In place of this previously displayed content list, the contents included in the selected shrink pack are unfolded and displayed. Thus, only the needed group is unfolded while the display of currently unneeded group is omitted. As a result, it is possible to reduce the number of listing contents, and thus, to improve visual recognition on the entire select screen. Therefore, it is possible to maintain preferable visual recognition without unnecessarily increasing the number of lines of the content listings. The following various categories are given as examples of groups depending on the content information. The categories may, for example, include, content location (storage place, provider), program genre, broadcasting or recording date, artist name, and watched/non-watched, channel and other attribute. The group (category) may be changed by the user during setup, and thereby, a user's visible recognition is improved. When the group (shrink pack folding contents) is selected by the same operation as selecting the content, contents included in the selected group are unfolded, and simultaneously, the unfolded contents are automatically folded as one item (shrink pack). Thus, only the contents included in the group which is desired are displayed on the list. Therefore, the number of contents simultaneously displayed is reduced, and a desired content is easy to be found from the list in a limited display screen. In this case, if a subgroup further exists in the unfolded group, the same shrink pack as above is hierarchically formed, and thereby, the foregoing effect is obtained with respect to an increase of the reproduction object contents.

While the description above refers to particular embodiments of the present invention, it will be understood that many modifications may be made without departing from the spirit thereof. The accompanying claims are intended to cover such modifications as would fall within the true scope and spirit of the present invention. The presently disclosed embodiments are therefore to be considered in all respects as illustrative and not restrictive, the scope of the invention being indicated by the appended claims, rather than the foregoing description, and all changes that come within the meaning and range of equivalency of the claims are therefore intended to be embraced therein.

## Claims

1. An information display apparatus **characterized by** comprising:
a display unit (S11) which displays a first list of contents and at least one group name, said at least one group name corresponding to a second list of contents;
an input unit (S12, S14, S17) which receives a selection instruction corresponding to a selected item from among the first list of contents or said at least one group name displayed on the display unit; and
a display control unit (S16) operative when said at least one group name is selected by said selection instruction, for causing the display unit to display said second list of contents corresponding to said at least one group name and stop displaying said first list of contents, said display unit further operative to stop displaying said at least one group name.

2. The apparatus according to claim 1, **characterized in that** the display control unit (S16) is further operative to cause the display unit to display a name of a group which corresponds to said first list of contents, when said first list of contents is not displayed on said display unit.

3. The apparatus according to claim 1, **characterized in that** control unit (S16) is operative to permit the first list of contents and said at least one group name to be scrolled in a unit of a predetermined number of items.

4. The apparatus according to claim 3, **characterized in that** control unit (S16) is operative to permit the second list to be scrolled in a unit of a predetermined number of items belonging to said second list including the group name corresponding to the first list of contents.

5. The apparatus according to claim 1,
**characterized in that** the display unit (S11) displays images corresponding to at least one focused item within said first list of contents, said images being displayed regardless of whether or not said focused item is associated with said selection instruction.

6. The apparatus according to claim 1, **characterized in that**
the selected content is focused by operating said display control unit to position said selected content within said first list at a predetermined display position on the display unit to indicate that the focused item is a selected content.

7. The apparatus according to claim 1, **characterized in that** when said input unit (S12, S14, S17) receives said selection instruction corresponding to said selected content, the display control unit (S16) makes the display unit play back the selected content or display details of the selected content.

8. The apparatus according to claim 1, **characterized in that** the display unit (S11) further displays a plurality of media type indicators corresponding to a plurality of media types, one media type associated with said first list of contents including said at least one group name and another media type associated with an third list of contents and at least one group name corresponding to a fourth list of contents, and
**characterized in that**, when the input unit (S12, S14, S17) receives a media type change instruction, the display control unit (S16) operates to cause the display unit to display the third list of contents and said at least one group name corresponding to said fourth list of contents.

9. The apparatus according to claim 8, **characterized in that** when the input unit (S12, S14, S17) receives the media type change instruction, the display control unit (S16) operates to causes the display unit to move the third list of contents and said at least one group name corresponding to said fourth list of contents across a display screen of the display unit in a horizontal direction, to indicate a changeover of the media type.

10. The apparatus according to claim 1, **characterized in that** the at least one group name identifies one of the group of content storage location, program genre, broadcast or recording data, artist name and watched/non-watched.

11. An information display method **characterized by** comprising:
displaying (S11) one a display unit a first list of contents and at least one group name, said at least one group name corresponding to a second list of contents;
receiving (S12, S14, S17) at an input unit a selection instruction corresponding to a selected item from among the first list of contents or said at least one group name displayed on the display unit; and
controlling (S16) display unit when said at least one group name is selected by said selection instruction, to display said second list of contents corresponding to said at least one group name and stop displaying said first list of contents, and to cause said display unit to stop displaying said at least one group name.

12. The method according to claim 11, **characterized by** further comprising the step of controlling the display unit to display a name of a group which corresponds to said first list of contents, when said first list of contents is not displayed on said display unit.
